# FASCICULE DE BREVET EUROPEEN

(11) **EP 2 762 367 B1**
(45) Date de publication et mention de la délivrance du brevet: **16.09.2015**
(21) Numéro de dépôt: 14152917.2
(22) Date de dépôt: 28.01.2014
(51) Int. Cl.: B60R 19/34

(54) **Ensemble de pare-chocs pour véhicule automobile**
Stoßstangenanordnung für Kraftfahrzeug
Bumper assembly for motor vehicle

(30) Priorité: 01.02.2013 FR 1350886
(43) Date de publication de la demande: 06.08.2014
(73) Titulaire: Faurecia Bloc Avant, 92000 Nanterre (FR)
(72) Inventeur: Borde, Patrick, 25200 Montbeliard (FR)
(74) Mandataire: Blot, Philippe Robert Emile

(56) Documents cités:
- EP-A2- 2 266 846
- WO-A1-2012/140930
- DE-A1- 10 359 483

## Description

La présente invention concerne un ensemble de pare-chocs pour véhicule automobile, comprenant une traverse destinée à s'étendre suivant une direction transversale du véhicule automobile, et deux absorbeurs de chocs espacés transversalement l'un de l'autre et liés à la traverse, chaque absorbeur de chocs étant destiné à être interposé entre la traverse et un longeron du véhicule automobile, chaque absorbeur de choc comprenant une âme centrale propre à relier la traverse au longeron, et une coque propre à se déformer sous l'effet d'une force d'une force de compression longitudinale, la coque entourant l'âme centrale et étant formée d'une demi-coque inférieure et d'une demi-coque supérieure, l'âme centrale étant formée par une portion centrale inférieure et une portion centrale supérieure. Un tel ensemble est décrit dans WO 2012/140930 A1.

Des ensembles de pare-chocs du type précité sont connus et font partie de l'équipement standard d'un véhicule automobile. Ces ensembles de pare-chocs, disposés à l'avant ou l'arrière du véhicule automobile, permettent d'amortir l'impact des chocs reçus par le véhicule sur sa face avant ou arrière, en absorbant une partie de l'énergie de ces chocs via les absorbeurs.

Généralement, les ensembles de pare-chocs sont réalisés au moins en partie en acier. Ces ensembles présentent l'inconvénient d'être lourds, et d'augmenter par conséquent la consommation et l'inertie du véhicule automobile.

Il existe également des ensembles de pare-chocs en aluminium. Si ces ensembles sont significativement allégés par rapport aux ensembles en acier, ils présentent l'inconvénient d'être chers.

Un bon compromis poids-prix est obtenu avec des ensembles de pare-chocs en matériaux composites. Cependant, les procédés de fabrication utilisant les matériaux composites limitent la réalisation de formes complexes, et les ensembles de pare-chocs en matériaux composites sont le plus souvent formés d'une pluralité de pièces assemblées les unes aux autres. Or la fixation des différentes pièces de ces assemblages les unes aux autres est fréquemment complexe et chronophage, ce qui réduit les cadences de production des véhicules. De plus, les zones de jonction des différentes pièces les unes aux autres forment des points de faiblesse dans les ensembles de pare-chocs concernés, et il en résulte que la tenue mécanique de ces ensembles est souvent insuffisante. En outre, les absorbeurs de ce type d'ensembles de pare-chocs présentent généralement une capacité d'absorption difficilement modulable.

Un objectif de l'invention est d'obtenir un ensemble de pare-chocs offrant un bon compromis poids-prix, facile à fabriquer, présentant une tenue mécanique satisfaisante et une capacité d'absorption aisément modulable.

A cet effet, l'invention a pour objet un ensemble de pare-chocs du type précité, caractérisé en ce que les demi-coques inférieure et supérieure de chaque absorbeur de chocs présentent au moins une région horizontale de liaison avec la portion centrale inférieure ou supérieure dudit absorbeur de chocs.

L'ensemble de pare-chocs selon l'invention peut comprendre une ou plusieurs des caractéristiques suivantes, prises isolément ou suivant toute combinaison techniquement possible :
- les portions centrales inférieure et supérieure de chaque absorbeur de chocs présentent une face verticale de liaison à la traverse ;
- les faces verticales des portions centrales inférieure et supérieure de chaque absorbeur de chocs comprennent chacune un décrochement horizontal, les décrochements horizontaux étant propre à former un logement de réception de la traverse ;
- la coque présente une section transversale circulaire ou polygonale ;
- la demi-coque inférieure de chaque absorbeur de chocs présente une section transversale différente de la section transversale de la demi-coque supérieure correspondante ;
- la traverse et les absorbeurs de chocs sont en matériau composite ;
- au moins un des absorbeurs de chocs comprend un tube logé entre la portion centrale inférieure et la portion centrale supérieure et s'étendant suivant la direction longitudinale, et la traverse comprend une ouverture, l'ouverture étant ménagée dans la traverse en regard du tube ;
- les portions centrales inférieure et supérieure de chaque absorbeur de chocs présentent une surface horizontale de liaison l'une à l'autre ;
- les surfaces horizontales des portions centrales inférieure et supérieure forment un canal de réception d'un élément fonctionnel du véhicule automobile, le canal de réception s'étendant suivant la direction longitudinale entre le tube et l'ouverture de la traverse ; et
- l'ensemble de pare-chocs comprend deux platines de fixation de l'ensemble de pare-chocs aux longerons du véhicule automobile, l'âme centrale de chaque absorbeur de chocs étant fixée au longeron du véhicule par l'intermédiaire de chaque platine.

L'invention sera mieux comprise à la lecture de la description qui va suivre, donnée uniquement à titre d'exemple et faite en se référant aux dessins annexés sur lesquels :
- la figure 1 est une vue éclatée en perspective, de trois-quarts avant, d'un ensemble de pare-chocs selon un premier mode de réalisation de l'invention ;
- la figure 2 est une vue en perspective, de trois-quarts arrière, de l'ensemble de pare-chocs de la figure 1 ;et
- la figure 3 est une vue en perspective d'une coque de l'ensemble de pare-chocs selon un deuxième mode de réalisation de l'invention.

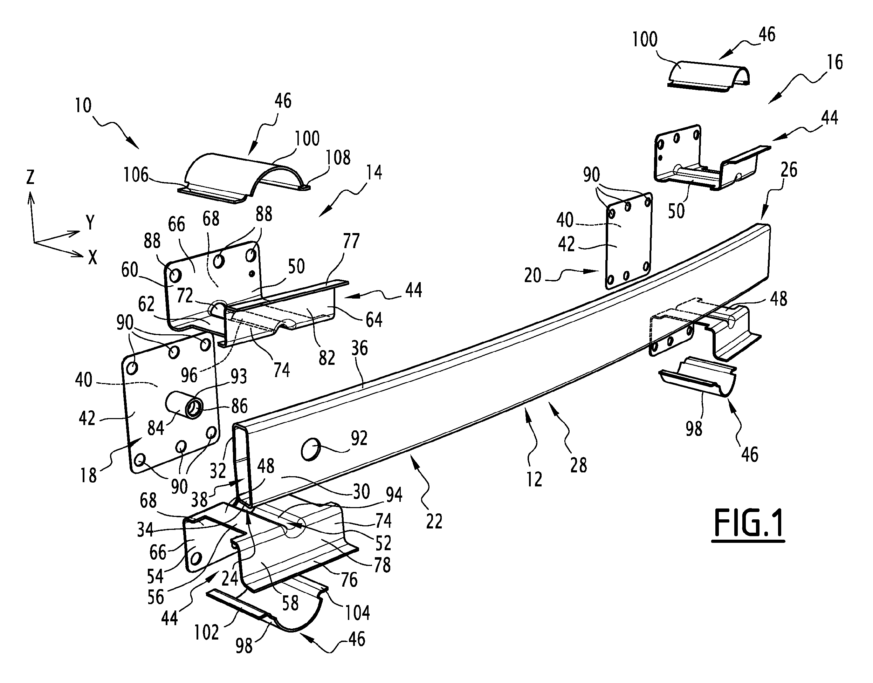

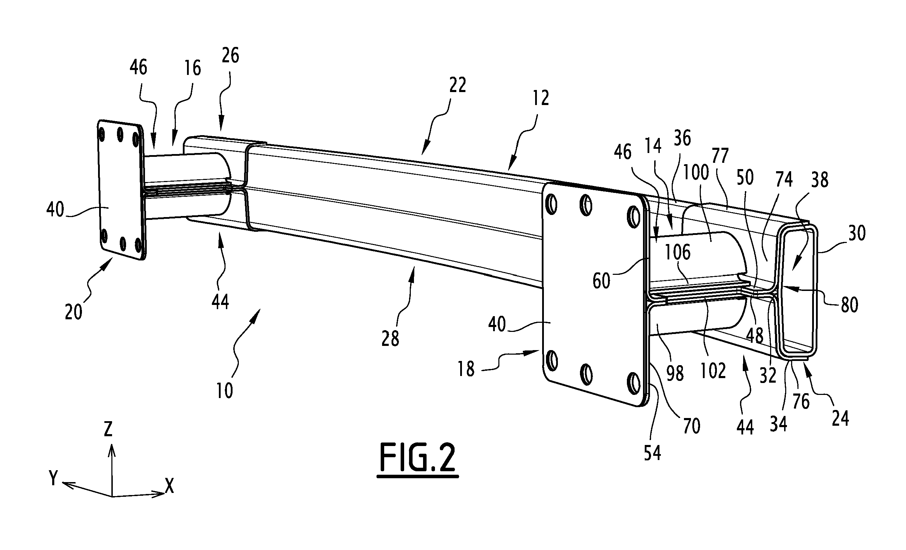

Dans tout ce qui suit, les termes d'orientation s'entendent par rapport au repère orthogonal pris en référence au sens de déplacement normal du véhicule automobile, représenté sur les figures 1 et 2 et dans lequel on distingue :
- un axe longitudinal X, horizontal s'étendant de l'arrière vers l'avant ;
- un axe transversal Y, horizontal s'étendant de la droite vers la gauche ; et
- un axe vertical Z, s'étendant du bas vers le haut.

Le terme « horizontal » est défini par rapport au plan XY, le terme « vertical » est défini par rapport au plan XZ ou YZ.

Un ensemble de pare-chocs avant 10 est représenté sur les figures 1 et 2. Il appartient à un véhicule automobile (non représenté) comprenant un châssis (non représenté) et deux longerons (non représentés). Chaque longeron s'étend suivant la direction longitudinal X, et les longerons sont espacés l'un de l'autre suivant la direction transversale Y. L'ensemble de pare-chocs 10 peut être installé à l'arrière et/ou à l'avant du véhicule automobile.

L'ensemble de pare-chocs 10 représenté sur la figure 1 comprend une traverse 12, deux absorbeurs de chocs 14, 16, et deux platines 18, 20 de fixation des absorbeurs de chocs 14, 16 aux longerons du véhicule automobile.

La traverse 12 est une poutre 22 s'étendant sensiblement suivant la direction transversale Y. En d'autres termes, les extrémités transversales 24, 26 de la traverse 12 sont alignées selon la direction transversale Y.

La traverse 12 est en particulier légèrement arquée, ou bombée, vers l'avant dans le plan horizontal. Par « légèrement », on comprend que le rayon de courbure de la traverse 12 est supérieur à 5 mètres. La région médiane 28 de la traverse 12, qui est sensiblement à équidistance des extrémités transversales 24, 26, est ainsi disposée en avant des extrémités transversales 24, 26 suivant la direction longitudinale X.

Comme représenté sur les figures 1 et 2, la traverse 12 est creuse. Elle comprend une paroi avant 30, sensiblement verticale, une paroi arrière 32, sensiblement verticale, ainsi que des parois inférieures et supérieures 34, 36 joignant les parois avant 30 et arrière 32. Ces parois 30, 32, 34 et 36 encadrent une chambre intérieure 38 de la traverse 12.

La chambre intérieure 38 s'étend transversalement sur toute la traverse 12. Elle débouche dans les extrémités transversales 24, 26 de la traverse 12. Elle présente une section longitudinale de forme sensiblement rectangulaire.

Chaque platine 18, 20 s'étend sensiblement suivant la direction verticale Z. Chaque platine 18, 20 comprend une face arrière 40 et une face avant 42. La face arrière 40 est fixée à un longeron du véhicule, et la face avant 42 est fixée à un absorbeur de chocs 14, 16.

Chaque absorbeur de chocs 14, 16 est interposé entre la traverse 12 et un longeron du véhicule automobile. Chaque absorbeur de chocs 14, 16 est adapté pour se déformer sous l'effet d'une force de compression longitudinale exercée sur lui-même.

Chaque absorbeur de chocs 14, 16 comprend une âme centrale 44 et une coque 46.

Chaque âme centrale 44 est propre à relier la traverse 12 à un longeron du véhicule automobile. Chaque âme centrale 44 comprend une portion centrale inférieure 48 et une portion centrale supérieure 50. Les portions centrales inférieure 48 et supérieure 50 sont par exemple sensiblement symétriques l'une de l'autre par rapport à un plan horizontal. Une des âmes centrales 44 comprend en outre un canal de réception 52 d'un élément fonctionnel du véhicule automobile tel qu'un anneau de remorquage ou autre (non représenté). En variante, chaque âme centrale 44 comprend un canal de réception 52.

Chaque portion centrale inférieure 48 comprend une embase inférieure plane 54, une surface horizontale inférieure 56 de liaison à la portion centrale supérieure 50 correspondante, et une face verticale inférieure 58 de liaison à la traverse 12. De la même façon, chaque portion centrale supérieure 50 comprend une embase supérieure plane 60, une surface horizontale supérieure 62 de liaison à la portion centrale inférieure 48 correspondante, et une face verticale supérieure 64 de liaison à la traverse 12.

Les embases planes inférieure 54 et supérieure 60 sont orientées sensiblement verticalement et sont disposées dans le prolongement l'une de l'autre.

Chaque embase plane 54, 60 comprend une face avant 66 et une face arrière 68.

La réunion de l'embase plane supérieure 54 et de l'embase plane inférieure 60 forme une embase plane verticale 70. L'embase plane verticale 70 d'au moins une des âmes centrales 44 présente un orifice 72. L'orifice 72 présente par exemple une section transversale circulaire.

La surface horizontale 56, 62 de chaque portion centrale 48, 50 fait saillie vers l'avant depuis la face avant 66 de l'embase plane verticale 70. Elle s'étend suivant une direction axiale sensiblement coïncidente avec la direction longitudinale X.

Les surfaces horizontales 56, 62 des portions centrales inférieure 48 et supérieure 50 s'étendent en regard l'une de l'autre et sont destinées à être accolées l'une à l'autre. Ces surfaces horizontales 56, 62 sont avantageusement collées, soudées ou rivetées l'une à l'autre.

Comme visible sur les figures 1 et 2, chaque face verticale 58, 64 des portions centrales inférieure 48 et supérieure 50 présente une section longitudinale sensiblement en L. En particulier, la face verticale 58 de la portion centrale inférieure 48 comprend une paroi verticale 74 et un décrochement horizontal inférieur 76. De même, la face verticale 64 de la portion centrale supérieure 50 comprend la paroi verticale 74 et un décrochement horizontal supérieur 77. Les dégagements horizontaux 76, 77 font saillie vers l'avant depuis la paroi verticale 74.

Pour la portion centrale inférieure 48, la paroi verticale 74 forme une moitié inférieure 78 d'un logement 80 de réception de la traverse 12. Pour la portion centrale supérieure 50, la paroi verticale 74 forme une moitié supérieure 82 du logement 80 de réception de la traverse 12. Le logement 80 de réception de la traverse 12 formé par les faces verticales 58, 64 des portions inférieure 48 et supérieure 50 est destiné à être accolé à la traverse 12.

Les faces verticales 58, 64 forment une surface étendue de contact entre le logement 80 de réception de la traverse 12 et la traverse 12, assurant ainsi une liaison rigide entre l'âme centrale 44 et la traverse 12. Ainsi, la paroi arrière 32 de la traverse 12 est appliquée contre la paroi verticale 74, la paroi supérieure 36 est disposée contre le décrochement supérieur 77 et la paroi inférieure 34 est disposée contre le décrochement inférieur 76. Les faces verticales 48, 64 formant le logement 80 de réception de la traverse 12 sont par exemple collées, soudées ou rivetées aux parois arrière 32, inférieure 34 et supérieure 36 de la traverse 12.

Comme représenté sur la figure 1, un des absorbeurs de chocs 14, 16 de l'ensemble de pare-chocs 10 comprend un tube 84. En variante, chaque absorbeur de chocs 14, 16 comprend le tube 84.

Le tube 84 est logé entre la portion centrale inférieure 48 et la portion centrale supérieure 50 de l'âme centrale 44. Il s'étend suivant la direction longitudinale X, dans l'orifice 72 de l'embase plane verticale 70, vers l'avant du véhicule automobile.

Le tube 84 comprend un volume intérieur 86. Le tube 84 est destiné à loger et à maintenir fixe dans le volume intérieur 86 une extrémité arrière (non représentée) de l'élément fonctionnel. Le tube 84 est maintenu fixe entre les portions centrales inférieure 48 et supérieure 50. Dans l'exemple représenté, le tube 84 est en outre rigidement fixé à la face avant 42 de la platine 18.

L'âme centrale 44 est fixée aux longerons du véhicule par l'intermédiaire de chaque platine 18, 20. Plus précisément, la face arrière 68 de chaque embase plane 54, 60 est fixée à la face avant 42 de la platine 18, 20.

L'embase plane verticale 70 et la platine 18, 20 sont fixées par vissage. L'embase plane verticale 70 comprend une pluralité de trous 88 destinés à recevoir une vis de fixation (non représentée) de l'embase plane verticale 70 à la platine 18, 20. La platine 18, 20 comprend de la même façon une pluralité de trous 90 disposés en regard des trous 88 de l'embase plane verticale 70 et destinés à recevoir la vis de fixation de l'embase plane verticale 70 à la platine 18, 20.

En variante, l'ensemble de pare-chocs 10 ne comprend pas de platine et l'embase plane verticale 70 est fixée directement à un longeron du véhicule automobile.

La traverse 12 comprend avantageusement au moins une ouverture 92 traversante. Cette ouverture 92 est ménagée dans la traverse 12 de l'un des absorbeurs de chocs en regard du tube 84. Cette ouverture 92 est destinée à former un passage pour l'élément fonctionnel.

Le canal de réception 52 de l'élément fonctionnel s'étend suivant la direction longitudinale X, dans le prolongement avant du tube 84, plus précisément entre l'extrémité avant 93 du tube 84 et l'ouverture 92 traversante ménagée dans la traverse 12. Il présente une section transversale circulaire. Il est composé d'un demi cylindre inférieur 94 formé dans la surface horizontale inférieure 56, et d'un demi cylindre supérieur 96 formé dans la surface horizontale supérieure 62.

L'élément fonctionnel est fixé au tube 84 à une extrémité arrière, s'étend vers l'avant sensiblement longitudinalement dans le volume intérieur 86 du tube 84, à l'intérieur du canal de réception 52, et traverse l'ouverture 92 ménagée dans la traverse 12. Une extrémité avant de l'anneau fait saillie vers l'avant en dehors de l'ouverture 92 de la traverse 12 de façon à être accessible.

Ainsi, le canal de réception 52 maintient l'élément fonctionnel en place et évite la déformation de l'élément fonctionnel.

La coque 46 entoure l'âme centrale 44 et est propre à se déformer sous l'effet d'une force de compression longitudinale. Elle est formée par une demi-coque inférieure 98 et une demi-coque supérieure 100.

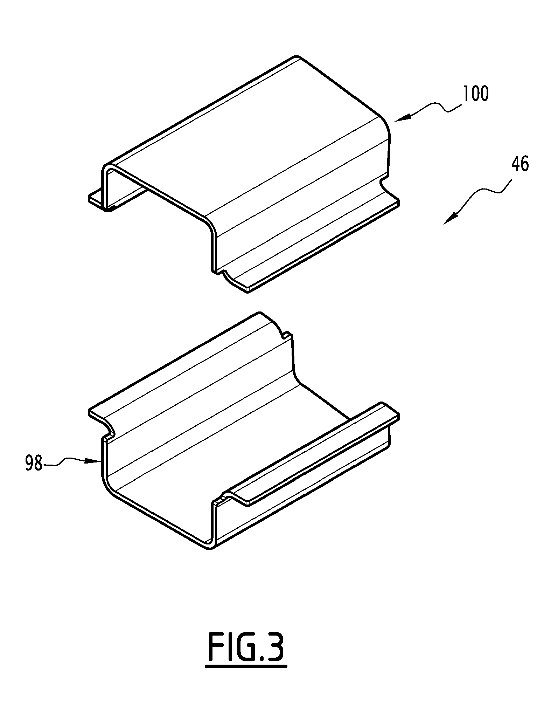

La coque 46 est par exemple cylindrique à base circulaire, comme visible sur la figure 2, ou cylindrique à base polygonale, par exemple rectangulaire comme visible sur la figure 3. La coque 46 présente ainsi une section circulaire ou polygonale, et s'étend alors suivant la direction longitudinale X. En variante, la coque 46 est conique, c'est-à-dire que la distance entre la coque 46 et l'âme centrale 44 varie selon la direction longitudinale X.

Comme représenté sur les figures 1 à 3, les demi-coques 98, 100 présentent des sections transversales identiques l'une à l'autre. En variante, la demi-coque inférieure 98 présente une section transversale différente de la section transversale de la demi-coque supérieure 100 correspondante. La forme, l'épaisseur et le matériau de la coque 46 peuvent être adaptés au comportement souhaité des absorbeurs en cas de choc et/ou à l'espace disponible dans le véhicule autour de l'ensemble de pare-chocs.

Lorsque les demi-coques ont la même section, elles sont sensiblement symétriques l'une de l'autre par rapport au plan horizontal de l'un des absorbeurs de chocs.

Dans l'exemple représenté, les demi-coques inférieure 98 et supérieure 100 sont jointes respectivement aux portions centrales inférieure 48 et supérieure 50. Plus précisément, les demi-coques inférieure 98 et supérieure 100 présentent chacune respectivement deux régions horizontales inférieures 102, 104 et deux régions horizontales supérieures 106, 108 de liaison avec les portions centrales 48, 50. Les régions horizontales inférieures 102, 104 s'étendent transversalement et sont diamétralement opposées sur la circonférence de la demi-coque inférieure 98. De même, les régions horizontales supérieures 106, 108 s'étendent transversalement et sont diamétralement opposées sur la circonférence de la demi-coque supérieure 100.

Ainsi, la demi-coque inférieure 98 est jointe à la surface horizontale inférieure 62 par l'intermédiaire des deux régions horizontales inférieures 102, 104, et la demi-coque supérieure 100 est jointe à la surface horizontale supérieure 56 par l'intermédiaire des deux régions horizontales supérieures 106, 108.

Les demi-coques 98, 100 et les portions centrales 48, 50 sont de préférence liées les unes aux autres par soudage, collage, ou rivetage.

En variante, les demi-coques inférieure 98 et supérieure 100 sont jointes l'une à l'autre le long d'un plan horizontal. Dans cette variante, les demi-coques 98, 100 sont de préférence liées entre elles par soudage, collage, ou rivetage.

La traverse 12 et les absorbeurs de chocs 14, 16 sont en particulier formés en matériaux composites. Le matériau composite comprend de préférence un élément de renfort tissé, typiquement en fibre de carbone ou en fibre de verre, noyé dans une matrice typiquement en polypropylène ou polyamide.

Chaque demi-coque 98, 100 est de préférence obtenue par thermocompression ou par injection.

Chaque ensemble de pare-chocs décrit ci-dessus présente donc un bon compromis poids-prix grâce à l'emploi de matériaux composites.

En outre, cet ensemble de pare-chocs est facile à fabriquer, du fait que les formes des différentes pièces sont particulièrement faciles à obtenir, par exemple par simple thermocompression ou injection.

Cette fabrication est encore facilitée dans le cas où la liaison entre les différentes pièces est assurée par simple soudage, collage, ou rivetage.

Par ailleurs, l'ensemble de pare-chocs selon l'invention offre une très bonne tenue mécanique. Celle-ci découle du fait des surfaces de contact étendues entre d'une part l'âme centrale et la traverse, et d'autre part entre l'embase de l'âme centrale et la platine ou le longeron.

Enfin, l'ensemble de pare-chocs selon l'invention présente une capacité d'absorption aisément modulable. En effet, les demi-coques inférieure et supérieure sont facilement dissociables de l'âme centrale et peuvent ainsi être échangées en fonction de la capacité d'absorption que l'on souhaite obtenir. La forme, l'épaisseur, et le matériau de chaque demi-coque peuvent varier de manière particulièrement aisée. Il est ainsi possible d'adapter le comportement et l'encombrement de l'ensemble de pare-chocs au type de véhicule automobile sur lequel il est installé.

On notera également que chaque ensemble de pare-chocs avant décrit ci-dessus est facilement adaptable pour constituer un ensemble arrière de véhicule automobile. Il suffit à cet effet de pivoter l'ensemble avant de 180° autour de l'axe vertical Z et de le fixer aux extrémités arrières des longerons du véhicule.

## Revendications

1. Ensemble de pare-chocs (10) pour véhicule automobile, comprenant une traverse (12) destinée à s'étendre suivant une direction transversale (Y) du véhicule automobile, et deux absorbeurs de chocs (14, 16) espacés transversalement l'un de l'autre et liés à la traverse (12), chaque absorbeur de chocs (14, 16) étant destiné à être interposé entre la traverse (12) et un longeron du véhicule automobile,
chaque absorbeur de chocs (14, 16) comprenant une âme centrale (44) propre à relier la traverse (12) au longeron, et une coque (46) propre à se déformer sous l'effet d'une force de compression longitudinale, la coque (46) entourant l'âme centrale (44) et étant formée d'une demi-coque inférieure (98) et d'une demi-coque supérieure (100), l'âme centrale (44) étant formée par une portion centrale inférieure (48) et une portion centrale supérieure (50), **caractérisé en ce que** les demi-coques inférieure (98) et supérieure (100) de chaque absorbeur de chocs (14, 16) présentent au moins une région horizontale (102, 104, 106, 108) de liaison avec la portion centrale inférieure (48) ou supérieure (50) dudit absorbeur de chocs (14, 16).

2. Ensemble de pare-chocs (10) selon la revendication 1, **caractérisé en ce que** les portions centrales inférieure (48) et supérieure (50) de chaque absorbeur de chocs (14, 16) présentent une face verticale (58, 64) de liaison à la traverse (12).

3. Ensemble de pare-chocs (10) selon la revendication 2, **caractérisé en ce que** les faces verticales (58, 64) des portions centrales inférieure (48) et supérieure (50) de chaque absorbeur de chocs (14, 16) comprennent chacune un décrochement horizontal (76, 77), les décrochements horizontaux (76, 77) étant propre à former un logement (80) de réception de la traverse (12).

4. Ensemble de pare-chocs (10) selon l'une quelconque des revendications précédentes, **caractérisé en ce que** la coque (46) présente une section transversale circulaire ou polygonale.

5. Ensemble de pare-chocs (10) selon l'une quelconque des revendications 1 à 4, **caractérisé en ce que** la demi-coque inférieure (98) de chaque absorbeur de chocs (14, 16) présente une section transversale différente de la section transversale de la demi-coque supérieure (100) correspondante.

6. Ensemble de pare-chocs (10) selon l'une quelconque des revendications précédentes, **caractérisé en ce que** la traverse (12) et les absorbeurs de chocs (14, 16) sont en matériau composite.

7. Ensemble de pare-chocs (10) selon l'une quelconque des revendications 1 à 6, **caractérisé en ce qu'**au moins un des absorbeurs de chocs (14, 16) comprend un tube (84) logé entre la portion centrale inférieure (48) et la portion centrale supérieure (50) et s'étendant suivant la direction longitudinale (X), et **en ce que** la traverse (12) comprend une ouverture (92), l'ouverture (92) étant ménagée dans la traverse (12) en regard du tube (84).

8. Ensemble de pare-chocs (10) selon l'une quelconque des revendications 1 à 7, **caractérisé en ce que** les portions centrales inférieure (48) et supérieure (50) de chaque absorbeur de chocs (14, 16) présentent une surface horizontale (56, 62) de liaison l'une à l'autre.

9. Ensemble de pare-chocs (10) selon les revendications 7 et 8, **caractérisé en ce que** les surface horizontales (56, 62) des portions centrales inférieure (48) et supérieure (50) forment un canal de réception (52) d'un élément fonctionnel du véhicule automobile, le canal de réception (52) s'étendant suivant la direction longitudinale (X) entre le tube (84) et l'ouverture (92) de la traverse (12).

10. Ensemble de pare-chocs (10) selon l'une quelconque des revendications précédentes, **caractérisé en ce qu'**il comprend deux platines (18, 20) de fixation de l'ensemble de pare-chocs (10) aux longerons du véhicule automobile, l'âme centrale (44) de chaque absorbeur de chocs (14, 16) étant fixée au longeron du véhicule par l'intermédiaire de chaque platine (18, 20).

## Patentansprüche

1. Stoßstangenanordnung (10) für Kraftfahrzeuge, die Folgendes aufweist:
einen Querträger (12), der dazu bestimmt ist, sich in einer Querrichtung (Y) des Kraftfahrzeugs zu erstrecken, sowie zwei Stoßfänger (14, 16), die in Querrichtung voneinander beabstandet sind und mit dem Querträger (12) verbunden sind, wobei jeder Stoßfänger (14, 16) dazu bestimmt ist,
zwischen dem Querträger (12) und einem Längsträger des Kraftfahrzeugs eingesetzt zu werden,
wobei jeder Stoßfänger (14, 16) einen zentralen Kern (44) aufweist, der dazu geeignet ist, den Querträger (12) mit dem Längsträger zu verbinden,
sowie eine Schale (46), die dazu geeignet ist, sich unter der Wirkung einen longitudinalen Druckkraft zu verformen, wobei die Schale (46) den zentralen Kern (44) umgibt und aus einer unteren Halbschale (98) und einer oberen Halbschale (100) gebildet ist, wobei der zentrale Kern (44) aus einem unteren zentralen Bereich (48) und aus einem oberen zentralen Bereich (50) gebildet ist,
**dadurch gekennzeichnet,**
**dass** die untere Halbschale (98) und die obere Halbschale (100) eines jeden Stoßfängers (14, 16) zumindest einen horizontalen Verbindungsbereich (102, 104, 106, 108) zum Verbinden mit dem unteren zentralen Bereich (48) bzw. dem oberen zentralen Bereich (50) des Stoßfängers (14, 16) aufweisen.

2. Stoßstangenanordnung (10) nach Anspruch 1,
**dadurch gekennzeichnet,**
**dass** der untere zentrale Bereich (48) und der obere zentrale Bereich (50) eines jeden Stoßfängers (14, 16) eine vertikale Fläche (58, 64) zum Verbinden mit dem Querträger (12) aufweist.

3. Stoßstangenanordnung (10) nach Anspruch 2,
**dadurch gekennzeichnet,**
**dass** die vertikalen Flächen (58, 64) des unteren zentralen Bereichs (48) und des oberen zentralen Bereichs (50) von jedem Stoßfänger (14, 16) jeweils einen horizontalen Absatz (76, 77) aufweisen, wobei die horizontalen Absätze (76, 77) dazu geeignet sind, einen Aufnahmeraum (80) zum Aufnehmen des Querträgers (12) zu bilden.

4. Stoßstangenanordnung (10) nach einem der vorangehenden Ansprüche,
**dadurch gekennzeichnet,**
**dass** die Schale (46) einen kreisförmigen ober polygonalen Querschnitt aufweist.

5. Stoßstangenanordnung (10) nach einem der Ansprüche 1 bis 4,
**dadurch gekennzeichnet,**
**dass** die untere Halbschale (98) von jedem Stoßfänger (14, 16) einen Querschnitt aufweist, der sich von dem Querschnitt der entsprechenden oberen Halbschale (100) unterscheidet.

6. Stoßstangenanordnung (10) nach einem der vorangehenden Ansprüche,
**dadurch gekennzeichnet,**
**dass** der Querträger (12) und die Stoßfänger (14, 16) aus Verbundmaterial bestehen.

7. Stoßstangenanordnung (10) nach einem der Ansprüche 1 bis 6,
**dadurch gekennzeichnet,**
**dass** zumindest einer der Stoßfänger (14, 16) ein Rohr (84) aufweist, das zwischen dem unteren zentralen Bereich (48) und dem oberen zentralen Bereich (50) aufgenommen ist und sich in der Längsrichtung (X) erstreckt, und dass der Querträger (12) eine Öffnung (92) aufweist, wobei die Öffnung (92) in dem Querträger (12) dem Rohr (84) gegenüberliegend ausgebildet ist.

8. Stoßstangenanordnung (10) nach einem der Ansprüche 1 bis 7,
**dadurch gekennzeichnet,**
**dass** der untere zentralen Bereich (48) und der obere zentralen Bereich (50) von jedem Stoßfänger (14, 16) jeweils eine horizontale Fläche (56, 62) zum gegenseitigen Verbinden aufweisen.

9. Stoßstangenanordnung (10) nach einem der Ansprüche 7 und 8,
**dadurch gekennzeichnet,**
**dass** die horizontalen Flächen (56, 62) des unteren zentralen Bereichs (48) und des oberen zentralen Bereichs (50) einen Aufnahmekanal (52) zum Aufnehmen eines Funktionselements des Kraftfahrzeugs bilden, wobei der Aufnahmekanal (52) sich in der Längsrichtung (X) zwischen dem Rohr (84) und der Öffnung (92) des Querträgers (12) erstreckt.

10. Stoßstangenanordnung (10) nach einem der vorangehenden Ansprüche,
**dadurch gekennzeichnet,**
**dass** sie zwei Befestigungsplatten (18, 20) zum Befestigen der Stoßstangenanordnung (10) an den Längsträgern des Kraftfahrzeugs aufweist, wobei der zentralen Kern (44) von jedem Stoßfänger (14, 16) mit der jeweiligen Platte (18, 20) an dem Längsträger des Kraftfahrzeugs befestigt ist.

## Claims

1. Bumper assembly (10) for an automotive vehicle, comprising a cross-member (12) designed to extend in a transverse direction (Y) of the automotive vehicle and two shock absorbers (14, 16) spaced transversely apart from one another and connected to the cross-member (12), each shock absorber (14, 16) being designed to be interposed between the cross-member (12) and a side member of the automotive vehicle,
each shock absorber (14, 16) comprising a central web (44) suitable for connecting the cross-member (12) to the side member and a shell (46) suitable for deforming under the effect of a longitudinal compressive force, the shell (46) surrounding the central web (44) and being formed from a bottom half-shell (98) and a top half-shell (100), the central web (44) being formed by a bottom central portion (48) and a top central portion (50), **characterised in that** the bottom (98) and top (100) half-shells of each shock absorber (14, 16) have at least one horizontal region (102, 104, 106, 108) to provide a connection to the bottom (48) or top (50) central portion of said shock absorber (14, 16).

2. Bumper assembly (10) as claimed in claim 1, **characterised in that** the bottom (48) and top (50) central portions of each shock absorber (14, 16) have a vertical face (58, 64) to provide a connection to the cross-member (12).

3. Bumper assembly (10) as claimed in claim 2, **characterised in that** the vertical faces (58, 64) of the bottom (48) and top (50) central portions of each shock absorber (14, 16) each comprise a horizontal projection (76, 77), the horizontal projections (76, 77) being configured to form a seat (80) for receiving the cross-member (12).

4. Bumper assembly (10) as claimed in any one of the preceding claims, **characterised in that** the shell (46) has a circular or polygonal cross-section.

5. Bumper assembly (10) as claimed in any one of claims 1 to 4, **characterised in that** the bottom half-shell (98) of each shock absorber (14, 16) has a cross-section that is different from the cross-section of the co-operating top half-shell (100).

6. Bumper assembly (10) as claimed in any one of the preceding claims, **characterised in that** the cross-member (12) and the shock absorbers (14, 16) are made from composite material.

7. Bumper assembly (10) as claimed in any one of claims 1 to 6, **characterised in that** at least one of the shock absorbers (14, 16) has a tube (84) housed between the bottom central portion (48) and the top central portion (50) and extending in the longitudinal direction (X), and **in that** the cross-member (12) has an orifice (92), the orifice (92) being disposed in the cross-member (12) facing the tube (84).

8. Bumper assembly (10) as claimed in any one of claims 1 to 7, **characterised in that** the bottom (48) and top (50) central portions of each shock absorber (14, 16) have a horizontal surface (56, 62) for connecting to one another.

9. Bumper assembly (10) as claimed in claims 7 and 8, **characterised in that** the horizontal surfaces (56, 62) of the bottom (48) and top (50) central portions form a housing duct (52) for a functional element of the automotive vehicle, the housing duct (52) extending in the longitudinal direction (X) between the tube (84) and the orifice (92) of the cross-member (12).

10. Bumper assembly (10) as claimed in any one of the preceding claims, **characterised in that** it comprises two plates (18, 20) for securing the bumper assembly (10) to the side members of the automotive vehicle, the central web (44) of each shock absorber (14, 16) being secured to the side member of the vehicle via each plate (18, 20).
